# FASCICULE DE BREVET EUROPEEN

(11) **EP 1 265 688 B1**
(45) Date de publication et mention de la délivrance du brevet: **08.07.2009**
(21) Numéro de dépôt: 01917195.8
(22) Date de dépôt: 21.03.2001
(51) Int. Cl.: B01D 39/20, A62B 17/00

(54) **PIECE FILTRANTE EN FORME EN FIBRES DE CARBONE ACTIVE**
FILTRIERENDER GEFORMTER GEGENSTAND AUS AKTIVKOHLEFASERN
FILTERING COMPONENT IN THE FORM OF ACTIVATED CARBON FIBRES

(30) Priorité: 22.03.2000 FR 0003638
(43) Date de publication de la demande: 18.12.2002
(73) Titulaire: Blücher GmbH, 40699 Erkrath (DE)
(72) Inventeur: OUVRY, Ludovic, F-69002 Lyon (FR)
(74) Mandataire: Gesthuysen, von Rohr & Eggert
(86) Numéro de dépôt international: PCT/FR2001/000835
(87) Numéro de publication internationale: WO 2001/070372

(56) Documents cités:
- DE-U- 29 904 120
- US-A- 4 274 979
- US-A- 4 699 896
- US-A- 5 928 986
- PATENT ABSTRACTS OF JAPAN vol. 6, no. 98, 8 juin 1982 (1982-06-08) & JP 57 027130 A (KOBE STEEL), 13 février 1982 (1982-02-13)

## Description

### Domaine de l'invention

L'invention concerne la fabrication de pièces filtrantes en forme ayant des propriétés adsorbantes grâce à l'utilisation de fibres de carbone activé. Par pièces filtrantes en forme, on entend ici des pièces auto-portantes ayant des formes non planes.

L'invention vise notamment la réalisation de pièces de vêtements en forme, par exemple gants, chaussettes, sous-vêtements, bonnets, ... destinées à des personnels civils ou militaires pour les protéger vis-à-vis d'agressions, en particulier nucléaires, bactériennes ou chimiques.

Le procédé selon l'invention peut toutefois être utilisé dans d'autres applications, par exemple pour réaliser des pièces filtrantes ayant des formes particulières, telles que des manchons, des calottes, ou autres.

### Arrière-plan de l'invention

Différents matériaux ont été proposés pour la réalisation de pièces de vêtements de protection NBC (protection anti-nucléaire/bactérienne/chimique).

Ainsi, il est connu de réaliser des tenues de protection en caoutchouc épais, typiquement en isobutyle. Ces tenues sont particulièrement inconfortables et difficilement supportables lorsque la température est relativement élevée, car elles retiennent la respiration.

Il a aussi été proposé d'utiliser des particules de charbon actif dispersées dans une mousse, par exemple une mousse de polyuréthane. Les tenues ou pièces de vêtements ainsi réalisées sont épaisses. Elles présentent en plus les inconvénients d'une mauvaise lavabilité et d'une mauvaise tenue au feu, du fait de la présence de la mousse. En outre, si leur utilisation nécessite un contre-collage sur un substrat en forme, la porosité et la respirabilité peuvent être affectées. De plus, en milieu humide, par exemple en cas de transpiration, la capacité d'adsorption des charbons actifs est diminuée.

L'utilisation de fibres de carbone activé a aussi été proposée. Leurs propriétés mécaniques font qu'il est difficile de leur faire subir des opérations textiles telles que filage, tissage, tricotage, couture, tressage,... pour réaliser des pièces en forme. On pourrait imaginer d'assembler des fibres de carbone activé à un substrat ayant la forme de la pièce à réaliser, mais l'on retrouve alors les inconvénients mentionnés plus haut d'obstruction de porosité et de diminution de la respirabilité.

Pour résoudre le problème posé par l'inadaptation des fils en fibres de carbone aux opérations textiles, il a été proposé dans le document FR 2 599 761 A d'utiliser un fil composite comprenant une âme ayant les propriétés mécaniques requises, telle qu'une âme métallique sur laquelle des fibres en précurseur de carbone sont enroulées ou guipées. Le fil composite peut être utilisé pour réaliser un tissu avant carbonisation des fibres en précurseur de carbone et activation. Le tissu obtenu est utilisable, selon le document FR 2 599 761 A pour confectionner des pièces de vêtement de protection. Un inconvénient de ce procédé réside dans la complexité et le coût de réalisation du fil composite. Un autre inconvénient réside dans la présence d'une armature métallique dans les pièces de vêtement réalisées, ce qui leur confère une raideur importante et peut être pénalisant du point de vue de la discrétion pour des applications militaires.

Les tissus de carbone activé sont connus et utilisés pour des applications en filtration. Les documents FR 2 741 363 A et WO 98/41678 A décrivent la réalisation de tels tissus. Toutefois, la réalisation de pièces en forme à partir de ces tissus nécessite une opération de couture. Or, des coutures réalisées sur un tissu de carbone activé augmentent localement la rigidité de façon sensible, créant un inconfort. En outre, les coutures créent des passages préférentiels pour les toxiques à retenir en engendrant une hétérogénéité de porosité.

### Objets et résumé de l'invention

La présente invention a pour but de fournir un procédé permettant de réaliser des pièces filtrantes en forme, notamment, mais non exclusivement, des pièces de vêtements de protection NBC, sans rencontrer les inconvénients précités.

Plus particulièrement, l'invention vise à obtenir de telles pièces filtrantes en forme réalisées intégralement en fibres de carbone activé, de sorte qu'elles soient lavables, stables thermiquement et capables de conserver de bonnes propriétés d'adsorption en milieu humide, tout en présentant intrinsèquement une bonne tenue mécanique et offrant une porosité exempte de passages préférentiels pour le milieu à filtrer.

Ces buts sont atteints grâce à un procédé selon la revendication 1.

L'invention est remarquable en ce que la pièce filtrante est obtenue directement après carbonisation et activation d'une préforme en fibres de précurseur de carbone ayant été, par un procédé textile, mise dans une forme correspondant à celle de la pièce à fabriquer.

Le procédé textile de mise en forme de la préforme peut être au moins en partie un tricotage, une couture de texture bidimensionnelle ou un tressage. Par texture bidimensionnelle, on entend ici notamment un tissu ou une nappe multidirectionnelle.

La préforme est réalisée en particulier en une texture en fibres cellulosiques, par exemple en fibres de rayonne, ce qui permet d'obtenir une grande surface spécifique, par exemple supérieure à 800 m²/g, voire supérieure à 1200 m²/g, et une grande pureté de fibres de carbone.

Selon un premier mode de mise en oeuvre du procédé, le traitement de carbonisation et activation comprend :
- une étape de carbonisation comprenant un traitement thermique éventuellement sous atmosphère inerte jusqu'à une température comprise entre 250°C et 500°C, et
- une étape d'activation de la préforme carbonisée réalisée à une température comprise entre 750°C et 950°C.

L'activation est réalisée sous atmosphère oxydante telle que vapeur d'eau et/ou dioxyde de carbone.

Selon un deuxième mode de mise en oeuvre du procédé, le traitement de carbonisation et activation comprend :
- une étape d'imprégnation de la préforme par une composition contenant au moins un constituant ayant une fonction de promoteur de la décomposition de la cellulose, et
- un traitement thermique à une température comprise entre 350°C et 500°C, de sorte qu'une pièce filtrante en fibres de carbone activé est directement obtenue.

L'invention vise aussi une pièce de vêtement telle que obtenue par le procédé selon la revendication 1.

Une telle pièce de vêtement est remarquable en ce qu'elle présente intrinsèquement la tenue nécessaire en vue de son utilisation, tout en étant formée de fibres de carbone activé.

En outre, étant constituées par du carbone, les pièces selon l'invention présentent de bonnes caractéristiques de tenue au feu et sont thermostables. Grâce à la conductibilité des fibres de carbone, elles permettent l'évacuation de l'électricité statique. Elles sont de plus aisément lavables. Par rapport aux particules de charbon actif, les pièces en fibres de carbone activé présentent une perte de performance due à l'humidité très limitée. La porosité des fibres de carbone activé présente en effet une grande majorité de micropores non susceptibles de se remplir d'eau par capillarité. De plus, du fait de leur dimension bien inférieure à celle des particules de charbon actif, les fibres de carbone activé offrent au flux gazeux, à masse égale, une surface externe très supérieure. A performance identique, l'épaisseur des pièces peut donc être fortement réduite.

### Brève description des dessins

L'invention sera mieux comprise à la lecture de la description faite ci-après, à titre indicatif mais non limitatif, en référence aux dessins annexés, sur lesquels :
- la figure 1 montre les étapes successives d'un procédé selon un mode de réalisation de l'invention ;
- la figure 2 montre les étapes successives d'un procédé selon une variante du mode de réalisation de la figure 1 ; et
- la figure 3 montre des photographies respectives d'une préforme de gant tricotée avec un fil de viscose, et du gant en fibres de carbone activé obtenu après traitement de carbonisation et activation de la préforme.

### Description détaillée de modes de réalisation

Dans la description qui suit, on évoque la fabrication de pièces de vêtement de protection. Comme indiqué plus haut, l'invention n'est toutefois pas limitée à cette application et englobe la réalisation, d'une façon générale, de pièces filtrantes en forme.

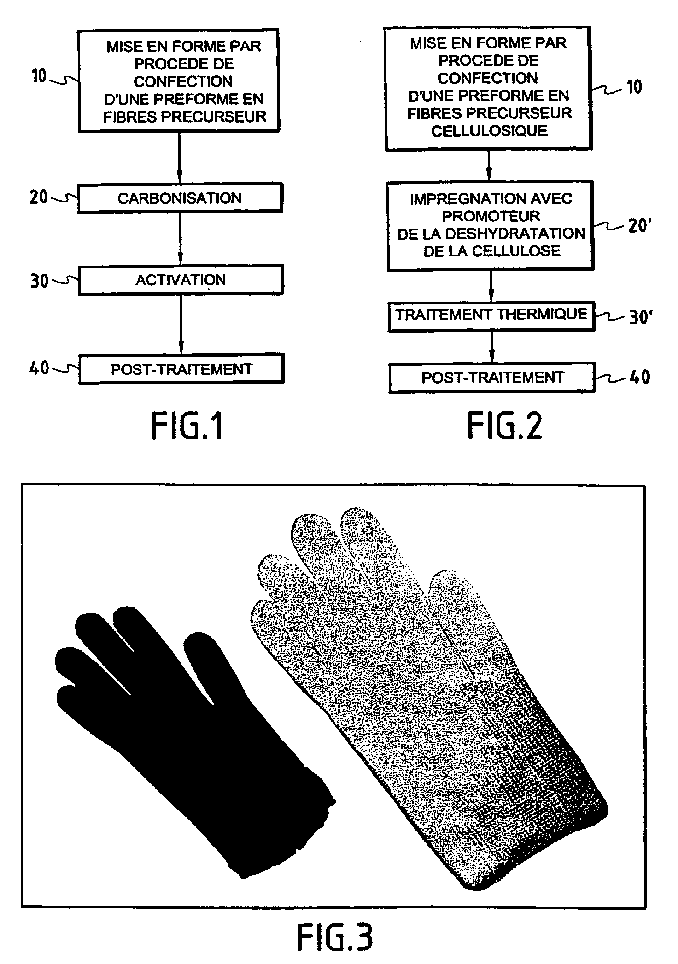

Une première étape 10 du procédé de la figure 1 consiste à réaliser une préforme d'une pièce à fabriquer, en utilisant un processus de confection textile.

La préforme est réalisée à partir de fibres de précurseur de carbone qui sont mises sous forme de fils ou de filés. Différents types de précurseurs peuvent être utilisés tels que le polyacrylonitrile (PAN) préoxydé, des brais, des composés phénoliques. De préférence, on utilise un précurseur cellulosiques en particulier une viscose, par exemple de la rayonne.

La préforme est mise dans une forme correspondant à celle de la pièce à fabriquer, tout en tenant compte des retraits intervenant lors du traitement de carbonisation et activation.

La mise en forme peut être réalisée directement à partir de fils ou filés en fibres de précurseur de carbone, notamment par tricotage ou par tressage.

Il est possible aussi de réaliser d'abord une texture bidimensionnelle à partir des fils ou filés en fibres de précurseur de carbone, par exemple un tissu ou une nappe multidirectionnelle, puis de mettre en forme la préforme par découpe et couture avec un fil de même nature. Une nappe multidirectionnelle est formée par superposition de plusieurs nappes unidirectionnelles constituées de fils ou filés s'étendant parallèlement à une même direction. Les nappes unidirectionnelles sont superposées avec des directions différentes et éventuellement liées les unes aux autres par exemple par couture ou par aiguilletage léger.

Une deuxième étape 20 du procédé consiste à carboniser la préforme. La carbonisation comprend une phase de traitement thermique en atmosphère inerte à une température comprise entre 250°C et 500°C, par exemple environ égale à 400°C, cette phase étant réalisée avec une montée en température lente, typiquement entre 0,01 °C/min et 0,5°C/min, et sur une durée relativement longue de plusieurs jours à plusieurs semaines.

Une phase finale de traitement thermique à température plus élevée pourra être réalisée ensuite, par exemple jusqu'à 600°C à 900°C, également sous atmosphère inerte, pendant une durée beaucoup plus courte, par exemple de quelques minutes.

Un traitement thermique complémentaire à température encore plus élevée, par exemple comprise entre 1000°C et 1 300°C et sous pression réduite, par exemple comprise entre 5 Pa et 60 Pa pourra éventuellement être réalisé pendant une durée assez brève, de l'ordre de la minute, pour favoriser l'élimination d'impuretés qui sont entraînées avec les effluents gazeux.

Une troisième étape 30 du procédé consiste à activer la préforme en fibres de carbone obtenue. L'activation est réalisée par traitement thermique de la préforme en fibres de carbone sous atmosphère oxydante, telle que vapeur d'eau ou de préférence dioxyde de carbone ou un mélange de dioxyde de carbone et de vapeur d'eau. On pourra se référer au document FR 2 741 363 A déjà cité. La température de traitement thermique est comprise entre 750°C et 950°C, de préférence comprise entre 850°C et 950°C et sa durée est de préférence comprise entre 50 min et 300 min en fonction de la surface spécifique désirée. On peut ainsi obtenir une pièce en fibres de carbone activé présentant une surface spécifique supérieure à 800 m²/g, même à 1 200 m²/g.

Une dernière étape 40 de post-traitement peut éventuellement être réalisée, en fonction de l'utilisation envisagée pour la pièce. A titre d'exemple, un post-traitement peut consister à former un dépôt très fin pour fixer d'éventuelles particules de carbone et éviter leur départ lors de l'utilisation de la pièce. Ce dépôt peut être formé par pulvérisation d'élastomère ou de latex.

Un autre type de post-traitement peut consister à associer à la pièce une doublure qui a pour fonction non pas de donner une tenue à la pièce, mais d'éviter un contact direct entre celle-ci et la peau de l'utilisateur. La doublure peut être aérée, pour ne pas affecter la porosité et la perméabilité et être reliée très ponctuellement à la pièce, par exemple par collage.

La figure 2 illustre une variante de réalisation du procédé utilisable avec une préforme en fibres précurseur cellulosique. Cette variante se distingue du procédé de la figure 1 en ce que les étapes 20 et 30 de carbonisation et activation sont remplacées par une étape 20' d'imprégnation de la préforme par une composition contenant un constituant promoteur de la déshydratation de la cellulose et une étape 30' de traitement thermique permettant d'obtenir directement la pièce en fibres de carbone activé.

L'imprégnation est réalisée avec une composition contenant au moins un constituant promoteur de la déshydratation de la cellulose, tel qu'un constituant minéral choisi parmi l'acide phosphorique, le chlorure de zinc, le sulfate de potassium, l'hydroxyde de potassium, le phosphate diammonique et le chlorure d'ammonium. De préférence, l'imprégnation est réalisée par une composition contenant de l'acide phosphorique de sorte que la masse d'acide fixée sur la préforme soit comprise entre 10 et 22 % de la masse de la préforme sèche. Le traitement thermique comprend une montée en température à une vitesse comprise entre 1 °C/min et 15°C/min, suivie d'un palier de préférence réalisé à une température comprise entre 350°C et 500°C sous atmosphère inerte ou sous atmosphère contenant un activateur de réaction tel que le dioxyde de carbone ou la vapeur d'eau. La pièce obtenue est ensuite de préférence lavée. Un tel procédé est décrit dans la demande de brevet internationale précitée WO 98/41678. On obtient directement une pièce en fibres de carbone activé.

### Exemple 1

Des préformes de gants telles que celle montrée à gauche sur la photographie de la figure 3, sont réalisées par tricotage au point de Jersey d'un fil de rayonne de 330 dtex, les bordures des gants étant réalisées avec un fil de rayonne de 167 dtex.

Les préformes sont disposées sur des claies dans un four étuve et traitées thermiquement pendant environ 2 semaines. La vitesse de montée en température est très faible, inférieure à 0,1°C/min, jusqu'à un palier environ égal à 400°C.

Les préformes obtenues sont ensuite traitées de nouveau thermiquement jusqu'à une température d'environ 700°C, pendant une durée d'environ 15 min, de manière à stabiliser le réseau carboné.

L'activation des préformes carbonisées est réalisée dans un four autoclave rotatif, à une température d'environ 850°C, sous atmosphère de dioxyde de carbone (CO₂) pendant une durée d'environ 1 h.

Les gants obtenus sont tels que celui montré sur la photographie de la figure 3 (à droite). Ils présentent les caractéristiques moyennes suivantes :
- surface spécifique environ égale à 1 500 m²/g,
- résistance à rupture en traction égale à 1,5 daN/cm environ,
- allongement à rupture : 50 % environ,
- taux de carbone : 95 % environ
- diamètre des fibres (filaments) de carbone activé : 17 µm environ.

Le retrait provoqué par la carbonisation et l'activation est en moyenne de 32 %. C'est ce retrait qui est pris en compte pour réaliser des préformes donnant des gants de tailles souhaitées.

On notera que selon le processus de confection textile utilisé et la forme des pièces, le retrait n'est pas nécessairement uniforme dans toute la pièce et dans toutes les directions. La forme à conférer à la préforme est de préférence déterminée par des essais, lesquels peuvent permettre de réaliser des modèles de simulation.

Afin d'éviter un contact direct avec la peau, le gant en fibres de carbone activé peut être enfilé sur un sous-gant par exemple en toile de coton. Une liaison ponctuelle par quelques points de colle entre le sous-gant et le gant peut être réalisée.

L'ensemble obtenu est directement insérable dans un sur-gant, par exemple en cuir. En exploitation, seul le sous-ensemble formé par le gant en fibres de carbone activé et le sous-gant éventuel est consommable. Il est en outre facilement incinérable sans dégagement d'effluents toxiques.

### Exemple 2

Des préformes de gant telles que celles de l'exemple 1 sont imprégnées par immersion dans une solution d'acide phosphorique H₃PO₄ à 20 % en volume dans de l'eau. Les préformes imprégnées sont étuvées à une température comprise entre 70°C et 90°C pour éliminer l'eau, la quantité d'acide phosphorique fixé sur les préformes représentant environ 16 % en masse par rapport à la masse des préformes sèches.

Les préformes sont admises ensuite en continu dans un four de traitement thermique dans lequel elles défilent en étant supportées par une toile par exemple en fibres de verre. Le traitement thermique comprend une montée en température à une vitesse d'environ 5°C/min, suivie d'un palier à une température d'environ 200°C. Le traitement thermique est réalisé sous atmosphère interte (azote) pendant une durée totale d'environ 90 min.

Les gants obtenus sont lavés à l'eau déminéralisée à une température d'environ 90°C.

Les gants en fibres de carbone activé ainsi réalisés présentent les caractéristiques suivantes :
- surface spécifique environ égale à 800 m²/g,
- résistance à rupture en traction égale à 1,2 daN/cm environ,
- allongement à rupture 50 % environ,
- taux de carbone 80 % environ

Le retrait mesuré est en moyenne de 28 %.

### Essais

Des essais d'efficacité à l'ypérite ont été réalisés avec des gants obtenus selon l'exemple 1.

Un essai en phase vapeur a été effectué avec du gaz ypérite à 37°C.

Aucune traversée de la barrière de protection constituée par le gant n'a été observée après plus de 8 h.

Un essai en phase liquide a été effectué avec de l'ypérite à température ambiante (20°C). L'ypérite a été mis au contact des gants sous forme de gouttes, la dose de contamination utilisée représentant 10 g/m² de surface des gants. La quantité d'hypérite ayant traversé les gants est mesurée par extraction d'un flux d'air à une vitesse de 0,2.10⁻² m/s à l'intérieur des gants. Après 24 h, la dose pénétrante mesurée variait entre 0,2 µg/m² et 1,02 µg/m².

Ces essais montrent la remarquable efficacité de protection obtenue grâce aux propriétés d'adsorption des fibres de carbone activé.

## Revendications

1. Procédé de fabrication d'une pièce filtrante en forme comprenant des fibres de carbone activé, ladite pièce filtrante en forme étant destinée à la réalisation d'une pièce de vêtement en forme fournie d'une fonction de protection vis-à-vis d'aggressions nucléaires, bactériennes ou chimiques et ladite pièce filtrante en forme étant autoportante et ayant une forme non plane, ledit procédé étant **caractérisé en ce qu'**il comprend les étapes qui consistent à:
- d'abord réaliser par un procédé de confection textile une préforme de pièce filtrante à fabriquer en une texture cohérente en fibres de précurseur de carbone, ladite préforme ayant une forme correspondant à celle de la pièce filtrante en forme à fabriquer; et après
- effectuer un traitement de carbonisation et activation pour obtenir directement ladite pièce filtrante en forme souhaitée et en fibres de carbone activé,
ladite préforme étant dimensionnée pour tenir compte des retraits lors du traitement de carbonisation et activation.

2. Procédé selon la revendication 1, **caractérisé en ce que** la préforme est réalisée au moins en partie par tricotage de fils formés de fibres en précurseur de carbone.

3. Procédé selon la revendication 1, **caractérisé en ce que** la préforme est réalisée au moins en partie par couture de texture bidimensionnelle en fibres en précurseur de carbone.

4. Procédé selon la revendication 1, **caractérisé en ce que** la préforme est réalisée au moins en partie par tressage de fils formés de fibres en précurseur de carbone.

5. Procédé selon l'une quelconque des revendications 1 à 4, **caractérisé en ce que** la préforme est en une texture cohérente en fibres cellulosiques.

6. Procédé selon la revendication 5, **caractérisé en ce que** la préforme est en une texture cohérente en fibres de rayonne.

7. Procédé selon l'une quelconque des revendications 1 à 6, **caractérisé en ce que** le traitement de carbonisation et activation comprend:
- une étape de carbonisation comprenant un traitement thermique sous atmosphère inerte jusqu'à une température comprise entre 250 °C et 500 °C, et
- une étape d'activation de la préforme carbonisée réalisée à une température comprise entre 750°C et 950 °C.

8. Procédé selon l'une quelconque des revendications 5 et 6, **caractérisé en ce que** le traitement de carbonisation et activation comprend:
- une étape d'imprégnation de la préforme par une composition contenant au moins un constituant ayant une fonction de promoteur de la décomposition de la cellulose, et
- un traitement thermique à une température comprise entre 350 °C et 500°C, de sorte qu'une pièce filtrante en fibres de carbone activé est directement obtenue.

9. Pièce de vêtement de protection en forme comprenant des fibres de carbone activé, **caractérisée en ce qu'**elle est réalisée en une seule pièce de texture cohérente constituée de fibres de carbone activé et obtenue par le procédé selon l'une quelconque des revendications 1 à 8.

10. Pièce de vêtement selon la revendication 9, **caractérisée en ce qu'**elle est constituée au moins en partie par un tricot de fils constitués de fibres de carbone activé.

11. Pièce de vêtement selon la revendication 9, **caractérisée en ce qu'**elle est constituée au moins en partie par une texture bidimensionnelle en fibres de carbone mise en forme par couture.

12. Pièce de vêtement selon la revendication 9, **caractérisée en ce qu'**elle est constituée au moins en partie par une tresse de fils constitués de fibres de carbone activé.

## Claims

1. Method of manufacturing a shaped filtering part comprising activated carbon fibres, said shaped filtering part being intended for the production of a shaped clothing item provided with the function of protecting against nuclear, bacteriological or chemical attack, said shaped filtering part being self-supporting and having a non-planar shape, said method being **characterized in that** it comprises the steps consisting in:
- firstly producing, by a fabric-making process, a preform of the filtering part to be manufactured, said preform having a coherent construction made of carbon precursor fibres and having a shape corresponding to that of the shaped filtering part to be manufactured; and afterwards
- carrying out a carbonization/activation treatment for said filtering part to be obtained directly, with the desired shape and made of activated carbon fibres,
the dimensions of said preform being such as to take into account any shrinkage during the carbonization/activation treatment.

2. Method according to Claim 1, **characterized in that** the preform is produced at least partly by knitting yarns formed from carbon precursor fibres.

3. Method according to Claim 1, **characterized in that** the preform is produced at least partly by stitching a two-dimensional construction made from carbon precursor fibres.

4. Method according to Claim 1, **characterized in that** the preform is produced at least partly by braiding yarns formed from carbon precursor fibres.

5. The method according to any one of Claims 1 to 4, **characterized in that** the preform is of a coherent construction made of cellulose fibres.

6. Method according to Claim 5, **characterized in that** the preform is of a coherent construction made of rayon fibres.

7. Method according to any one of Claims 1 to 6, **characterized in that** the carbonization/activation treatment comprises:
- a carbonization step comprising a heat treatment in an inert atmosphere up to a temperature between 250 °C and 500 °C; and
- an activation step, in which the carbonized preform is activated at a temperature of between 750 °C and 950 °C.

8. Method according to either of Claims 5 and 6, **characterized in that** the carbonization/activation treatment comprises:
- an impregnation step, in which the preform is impregnated with a composition containing at least one constituent having the function of promoting cellulose decomposition; and
- a heat treatment at a temperature of between 350 °C and 500 °C so that a filtering part made of activated carbon fibres is obtained directly.

9. Shaped protective clothing item comprising activated carbon fibres, **characterized in that** it is produced as a single item of coherent construction consisting of activated carbon fibres and obtained by the method according to any one Claims 1 to 8.

10. Clothing item according to Claim 9, **characterized in that** it is formed at least partly by knitting yarns consisting of activated carbon fibres.

11. Clothing item according to Claim 9, **characterized in that** it is formed at least partly by a two-dimensional carbon-fibre construction shaped by stitching.

12. Clothing item according to Claim 9, **characterized in that** it is formed at least partly by braiding yarns consisting of activated carbon fibres.

## Patentansprüche

1. Verfahren zur Herstellung eines filtrierenden geformten Gegenstands, der Aktivkohlefasern umfaßt, wobei der filtrierende geformte Gegenstand zur Ausführung (Herstellung) eines geformten Bekleidungsgegenstands dient, der mit einer Schutzfunktion gegenüber nuklearen, bakteriellen oder chemischen Angriffen ausgestattet ist, und wobei der filtrierende geformte Gegenstand selbsttragend ist und eine nicht plane Form aufweist, wobei das Verfahren **dadurch gekennzeichnet ist, daß** es die folgenden Schritte umfaßt, die darin bestehen, daß:
- zunächst mittels eines Verfahrens der Textilkonfektion eine Vorform des herzustellenden filtrierenden Gegenstands in einer kohärenten Textur aus Kohlenstoffvorläuferfasernausgeführt wird, wobei die Vorform eine Form aufweist, die der des herzustellenden filtrierenden geformten Gegenstands entspricht; und dann
- eine Carbonisierungs- und Aktivierungsbehandlung durchgeführt wird, um den gewünschten filtrierenden geformten Gegenstand aus Aktivkohlefasern direkt zu erhalten,
wobei die Vorform so dimensioniert ist, um Schrumpfungen während der Carbonisierungs- und Aktivierungsbehandlung zu berücksichtigen.

2. Verfahren nach Anspruch 1, **dadurch gekennzeichnet, daß** die Vorform mindestens zum Teil durch Verstricken von Fäden ausgeführt wird, die aus Kohlenstoffvorläuferfasern geformt sind.

3. Verfahren nach Anspruch 1, **dadurch gekennzeichnet, daß** die Vorform mindestens zum Teil durch Nähen der zweidimensionalen Textur aus Kohlenstoffvorläuferfasern ausgeführt wird.

4. Verfahren nach Anspruch 1, **dadurch gekennzeichnet, daß** die Vorform mindestens zum Teil durch Verflechten von Fäden ausgeführt wird, die aus Kohlenstoffvorläuferfasern geformt sind.

5. Verfahren nach einem der Ansprüche 1 bis 4, **dadurch gekennzeichnet, daß** die Vorform aus einer kohärenten Textur aus Cellulosefasern ist.

6. Verfahren nach Anspruch 5, **dadurch gekennzeichnet, daß** die Vorform aus einer kohärenten Textur aus kunstseidefasern ist.

7. Verfahren nach einem der Anspruche 1 bis 6, **dadurch gekennzeichnet, daß** die Carbonisierungs- und Aktivierungsbehandlung Folgendes umfaßt:
- einen Schritt der Carbonisierung, der eine thermische Behandlung unter inerter Atmosphäre bis zu einer Temperatur im Bereich zwischen 250 °C und 500 °C umfaßt, und
- einen Schritt der Aktivierung der carbonisierten Vorform, der bei einer Temperatur im Bereich zwischen 750 °C und 950 °C ausgeführt wird.

8. Verfahren nach einem der Ansprüche 5 und 6, **dadurch gekennzeichnet, daß** die Carbonisierungs- und Aktivierungsbehandlung Folgendes umfaßt:
- einen Schritt der Imprägnierung der Vorform mit einer Zusammensetzung, die mindestens einen Bestandteil umfaßt, der eine Funktion zur Förderung des Abbaus der Cellulose aufweist, und
- eine thermische Behandlung bis zu einer Temperatur im Bereich zwischen 350 °C und 500 °C, derart, daß ein filtrierender Gegenstand aus Aktivkohlefasern direkt erhalten wird.

9. Geformter Schutzkleidungsgegenstand, der Aktivkohlefasern umfaßt, **dadurch gekennzeichnet, daß** er als einstückiger Gegenstand mit kohärenter Textur ausgeführt wird, der aus Aktivkohlefasern besteht und mittels des Verfahrens nach einem der Ansprüche 1 bis 8 erhältlich ist.

10. Bekleidungsgegenstand nach Anspruch 9, **dadurch gekennzeichnet, daß** er mindestens zum Teil aus einem Gestrick aus Fäden besteht, die aus Aktivkohlefasern bestehen.

11. Bekleidungsgegenstand nach Anspruch 9, **dadurch gekennzeichnet, daß** er mindestens zum Teil aus einer zweidimensionalen Textur aus Kohlefasern besteht, die durch Nähen in Fort gebracht wurde.

12. Bekleidungsgegenstand nach Anspruch 9, **dadurch gekennzeichnet, daß** er mindestens zum Teil aus einem Geflecht aus Fäden besteht, die aus Aktivkohlefasern bestehen.
